# EUROPEAN PATENT APPLICATION

(11) **EP 4 795 947 A1**
(43) Date of publication of application: **26.08.2026**
(21) Application number: 24893479.6
(22) Date of filing: 20.11.2024
(51) Int. Cl.: A24F 40/40, A24F 40/00, A24F 40/50, A24F 40/46

(54) **HEATING DEVICE, AEROSOL GENERATING SYSTEM, AND LIGHT HEATER FOR HEATING DEVICE**

(30) Priority: 21.11.2023 CN 202323153260 U; 21.12.2023 CN 202311778737
(71) Applicant: Shenzhen First Union Technology Co., Ltd., Shenzhen, Guangdong 518000 (CN)
(72) Inventor: LI, Haoteng, Shenzhen, Guangdong 518000 (CN); XU, Zhongli, Shenzhen, Guangdong 518000 (CN); LI, Yonghai, Shenzhen, Guangdong 518000 (CN)
(74) Representative: Viering, Jentschura & Partner mbB Patent- und Rechtsanwälte
(86) International application number: PCT/CN2024/133277
(87) International publication number: WO 2025/108323

(57) **Abstract**

This application provides a heating device, an aerosol generating system, and a light heater for the heating device. The heating device is configured to heat an aerosol generating article to generate an aerosol. The heating device includes: a receiving cavity, configured to receive the aerosol generating article; and a light heater, configured to emit light to irradiate the aerosol generating article to heat the aerosol generating article through the light to generate the aerosol. The light heater is not in contact with the aerosol generating article when the aerosol generating article is received in the receiving cavity. According to the heating device, the light heater heats, through heat conduction without contact with the aerosol generating article, the aerosol generating article by emitting the light.

## Description

### CROSS-REFERENCE TO RELATED APPLICATIONS

This application claims priority to Chinese Patent Application No. 202323153260.6, filed with the China National Intellectual Property Administration on November 21, 2023 and entitled "HEATING DEVICE, AEROSOL GENERATING SYSTEM, AND LIGHT HEATER FOR HEATING DEVICE", and claims priority to Chinese Patent Application No. 202311778737.1, filed with the China National Intellectual Property Administration on December 21, 2023 and entitled "HEATING DEVICE, AEROSOL GENERATING SYSTEM, AND LIGHT HEATER FOR HEATING DEVICE", which are incorporated herein by reference in their entireties.

### TECHNICAL FIELD

Embodiments of this application relate to the field of heat-not-burn aerosol generating technologies, and in particular, to a heating device, an aerosol generating system, and a light heater for the heating device.

### BACKGROUND

During use of tobacco products (for example, cigarettes and cigars), tobacco is burnt to generate tobacco smoke. An attempt has been made to replace these tobacco-burning products by producing products that release compounds without burning.

An example of such a product is a heating device, which releases compounds by heating rather than burning materials. For example, the materials may be tobacco or other non-tobacco products, and the non-tobacco products may or may not include nicotine. Known heating devices heat the tobacco or other non-tobacco products through heat conduction by contact at a temperature of about 250°C to 500°C.

### SUMMARY

An embodiment of this application provides a heating device, configured to heat an aerosol generating article to generate an aerosol. The heating device includes:
a receiving cavity, configured to receive the aerosol generating article; and
a light heater, configured to emit light to irradiate the aerosol generating article, so that the aerosol generating article is heated through the light to generate the aerosol. The light heater is not in contact with the aerosol generating article when the aerosol generating article is received in the receiving cavity.

In some embodiments, the light heater is configured substantially as a point light source, a line light source, or an area light source; and/or
the light heater is configured substantially in a form of a bulb, a lamp tube, or a lamp panel.

In some embodiments, the light heater and the receiving cavity are arranged at intervals along a longitudinal direction of the receiving cavity; and a first spacing is defined between the light heater and the receiving cavity when the aerosol generating article is received in the receiving cavity, so that the light heater is not in contact with the aerosol generating article.

In some embodiments, the first spacing is 2 mm to 10 mm.

In some embodiments, the heating device further includes:
an airflow channel, defining a channel path through which air enters the aerosol generating article through the light heater.

The light heater is at least partially exposed to the airflow channel; and/or
the light heater is located upstream of the aerosol generating article; and/or
air flows through at least part of a surface of the light heater during inhalation to partially absorb heat from the surface of the light heater and is heated, and is outputted to the aerosol generating article.

In some embodiments, the light heater includes:
a light-transmissive cover through which light is capable of being transmitted and which surrounds or defines a sealed cavity; and
a light-emitting element, configured to emit light. The light-emitting element is located in the cavity and arranged without contact with the light-transmissive cover.

Alternatively, in an embodiment, the light heater includes:
a light-transmissive cover through which light is capable of being transmitted and which surrounds or defines a sealed cavity; and
a light-emitting element, configured to emit light. The light-emitting element is located in the cavity and arranged with contact with the light-transmissive cover.

In some embodiments, the light-emitting element is an electroluminescent element.

In some embodiments, the heating device further includes:
a battery core, configured to supply power; and
a control circuit, configured to control the battery core to provide electric power to the light-emitting element to enable the light-emitting element to emit light at a working temperature of 450°C to 2800°C.

In some embodiments, the light-emitting element has a working power of about 20 W to 60 W; and/or
the light-emitting element has a resistance value of 0.1 Ω to 0.6 Ω at the working temperature of 450°C to 2800°C; and/or
light having a wavelength of 800 nm to 1300 nm in the light emitted by the light-emitting element accounts for more than 60% of all the light.

In some embodiments, the light-emitting element includes tungsten, a carbon fiber, or an oxide of at least one metal element.

In some embodiments, halogen is sealed in the cavity; and/or
1 × 10-6 to 1 × 10-2 µmol/mm3 halogen is sealed in the cavity; and/or
an inert gas is filled into the cavity; and/or
the cavity has a degree of vacuum; and/or
a pressure in the cavity is less than 0.85 atm.

In some embodiments, a transmittance of the light-transmissive cover for the light emitted by the light-emitting element is above 90%; and/or
the light-transmissive cover includes at least one of quartz, glass, ceramic, or mica; and/or
at least one or more collimating lenses are defined on the light-transmissive cover; and/or
at least one protruding structure is arranged on the light-transmissive cover; and/or
at least one heat dissipation part is arranged on the light-transmissive cover to dissipate heat; and/or
the light-transmissive cover is configured to be substantially in a shape of a sphere.

In some embodiments, the light-transmissive cover includes a first portion and a second portion; and when the aerosol generating article is received in the receiving cavity, the first portion faces toward or is adjacent to the aerosol generating article, and the second portion faces away from the aerosol generating article.

In some embodiments, the first portion and the second portion are both curved-surface or arc-surface structures, and have opposite bending directions; and/or
a curvature of the first portion is greater than a curvature of the second portion; and/or
a surface of the first portion is smooth, and at least one protruding heat dissipation part is arranged on a surface of the second portion.

In some embodiments, the light-transmissive cover includes a first portion and a second portion; and
the light-emitting element is located in the first portion and avoids the second portion; and
the heating device supports the light heater by holding the second portion.

In some embodiments, the light-emitting element is configured to be in a form of a solenoid coil; and/or
the light-emitting element has 3 to 8 windings; and/or
the light-emitting element has a length of 2 mm to 5 mm; and/or
a wire material of the light-emitting element has a diameter of about 0.05 mm to 0.4 mm; and/or
the light-emitting element is wound by a tungsten wire having a purity of above 99%; and/or
an axis of the light-emitting element is perpendicular to the aerosol generating article or a longitudinal direction of the receiving cavity.

In some embodiments, the light-emitting element is configured to be in a form of a planar spiral coil; and/or
the light-emitting element is substantially planar; and/or
the light-emitting element includes a flat base, and a light-emitting track or a light-emitting coating formed on the base; and/or
the light-emitting element has a diameter of 4 mm to 10 mm.

In some embodiments, the heating device further includes:
a light guide arranged around at least part of the light heater, which is configured to guide part of the light emitted by the light heater toward an outer side surface of the aerosol generating article.

In some embodiments, part of the light emitted by the light heater irradiates an upstream end portion of the aerosol, and another part of the light is guided through the light guide to the outer side surface of the aerosol generating article.

In some embodiments, the light guide is reflective; and/or
the light guide is configured to guide the part of the light emitted by the light heater, by reflecting the part of the light at least once, to the outer side surface of the aerosol generating article.

In some embodiments, the light guide includes a first light-guiding portion which surrounds the light heater, and a second portion which extends from the first light-guiding portion toward the receiving cavity or the aerosol generating article.

In some embodiments, the first light-guiding portion has a cross-sectional shape that is approximately parabolic; and/or
the light heater is arranged at or near a focus of the parabolic cross section of the first light-guiding portion; and/or
the first light-guiding portion has a substantially-tapered shape.

In some embodiments, the heating device further includes:
a battery core, configured to supply power;
a circuit board, configured to control the battery core to provide electric power to the light heater; and
an electronic chamber, configured to accommodate the battery core and the circuit board. The electronic chamber and the light heater are optically isolated to prevent the light emitted by the light heater from irradiating the battery core and/or the circuit board.

In some embodiments, the light heater further includes:
a conductive lead, electrically connected to the light-emitting element to guide a current on the light-emitting element, where the conductive lead at least partially extends, from the cavity, out of the light-transmissive cover; and
a sealing material, arranged between the conductive lead and the light-transmissive cover to enable sealing therebetween.

In some embodiments, the sealing material includes a metal which withstands a temperature of at least 800°C; and/or
the sealing material includes molybdenum, titanium, or an alloy thereof.

In some embodiments, the light heater and/or the light-transmissive cover is configured as a pin which extends at least partially in the receiving cavity, or in a shape of a column or a rod or a bar; and the light heater and/or the light-transmissive cover is configured to, when the aerosol generating article is received in the receiving cavity, extend into a central hole of the aerosol generating article, so that the light-emitting element and the aerosol generating article overlap in a radial direction.

In some embodiments, the light-emitting element is located outside the receiving cavity.

The light-transmissive cover has an extension portion which extends at least partially into the receiving cavity; and the extension portion extends, when the aerosol generating article is received in the receiving cavity, into a central hole of the aerosol generating article, so that part of the light emitted by the light-emitting element is guided to an inner surface of the aerosol generating article.

In some embodiments, the light heater includes at least two light-emitting elements optically isolated from each other.

In some embodiments, the light heater includes a plurality of light-emitting elements which are arranged discretely or arranged in an array; and
the plurality of light-emitting elements are configured to emit light independently or sequentially to independently or sequentially heat different parts of the aerosol generating article.

Another embodiment of this application further provides an aerosol generating system, including:
an aerosol generating article; and
the heating device described above.

Another embodiment of this application further provides a light heater for a heating device, including:
a light-transmissive cover through which light is capable of being transmitted and which surrounds or defines a sealed cavity; and
a light-emitting element, configured to emit light. The light-emitting element is located in the cavity and arranged without contact with the light-transmissive cover.

Another embodiment of this application further provides an aerosol generating system, including:
a liquid storage cavity, configured to store a liquid aerosol generating substrate; and
a light heater, configured to generate an aerosol by heating the liquid aerosol generating substrate by light.

According to the heating device, the light heater heats, through heat conduction without contact with the aerosol generating article, the aerosol generating article by emitting the light.

### BRIEF DESCRIPTION OF THE DRAWINGS

One or more embodiments are exemplarily described with reference to pictures in accompanying drawings corresponding to the embodiments, and the exemplary descriptions do not constitute a limitation on the embodiments. Elements in the accompanying drawings that have same reference numerals are represented as similar elements, and unless otherwise particularly stated, the pictures in the accompanying drawings are not drawn to scale.
FIG. 1 is a schematic diagram of an aerosol generating system according to an embodiment;
FIG. 2 is a schematic cross-sectional diagram of a light heater in FIG. 1 from a perspective;
FIG. 3 is a schematic diagram of an aerosol generating system according to another embodiment;
FIG. 4 is a schematic cross-sectional diagram of a light heater in FIG. 3 from a perspective;
FIG. 5 is a schematic structural diagram of the light heater in FIG. 3 from another perspective;
FIG. 6 is a schematic diagram of an aerosol generating system according to another embodiment;
FIG. 7 is a schematic diagram of an aerosol generating system according to another embodiment;
FIG. 8 is a schematic cross-sectional diagram of a light heater from another perspective according to another embodiment;
FIG. 9 is a schematic structural diagram of the light heater in FIG. 8 from another perspective;
FIG. 10 is a schematic diagram of an aerosol generating system according to an embodiment;
FIG. 11 is a schematic diagram of a heating device according to another embodiment;
FIG. 12 is a schematic diagram of an aerosol generating article according to another embodiment;
FIG. 13 is a schematic diagram of an aerosol generating system which includes the aerosol generating article in FIG. 12 and the heating device in FIG. 11;
FIG. 14 is a schematic cross-sectional diagram of a light heater in FIG. 11 from a perspective;
FIG. 15 is a schematic cross-sectional diagram of a light heater according to another embodiment;
FIG. 16 is a schematic cross-sectional diagram of a light heater according to another embodiment;
FIG. 17 is a schematic cross-sectional diagram of a light heater according to another embodiment;
FIG. 18 is a schematic cross-sectional diagram of a light heater according to another embodiment;
FIG. 19 is a schematic cross-sectional diagram of a light heater according to another embodiment;
FIG. 20 is a schematic cross-sectional diagram of a light heater according to another embodiment;
FIG. 21 is a schematic diagram of an aerosol generating system according to another embodiment;
FIG. 22 is a schematic diagram of a heating device according to another embodiment;
FIG. 23 is a schematic diagram of an aerosol generating article from a perspective according to another embodiment from a perspective;
FIG. 24 is a schematic diagram of the aerosol generating article in FIG. 23 from another perspective;
FIG. 25 is a schematic diagram of an aerosol generating system which includes the aerosol generating article in FIG. 23 and the heating device in FIG. 22;
FIG. 26 is a schematic diagram of a heating device according to another embodiment;
FIG. 27 is a schematic diagram of a spectrum of infrared light radiated by a light heater measured in an embodiment; and
FIG. 28 is a schematic diagram of an infrared absorption spectrum measured when an aerosol generating substrate is heated by a light heater in an embodiment.

### DETAILED DESCRIPTION

For ease of understanding of this application, this application is described below in more detail with reference to accompanying drawings and specific implementations.

An embodiment of this application provides an aerosol generating system configured to generate an aerosol. In some embodiments, the aerosol generating system includes: an aerosol generating article and a heating device which is configured to heat the aerosol generating article to generate aerosol. The aerosol generating article can generate the aerosol by being heated.

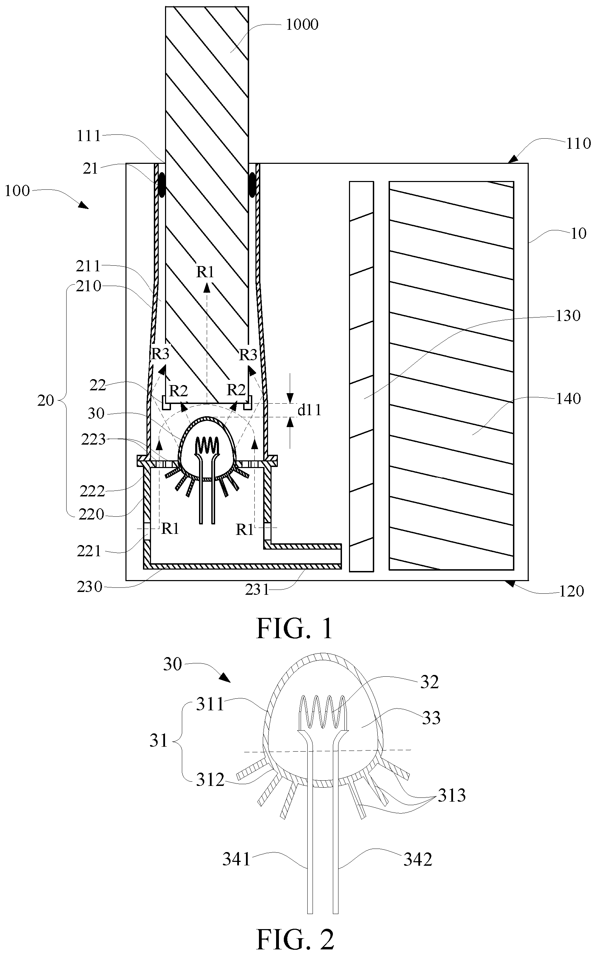

FIG. 1 is a schematic diagram of an aerosol generating system according to an embodiment; In this embodiment, the aerosol generating system includes:
an aerosol generating article 1000, including an aerosol generating substrate, to generate an aerosol when heated; and
a heating device 100, configured to receive and heat the aerosol generating article 100, to generate the aerosol for a user to inhale.

In some embodiments, an overall appearance of the aerosol generating article 1000 is in a longitudinal cylindrical structure, for example, configured to be a shape of a cylinder which is similar to a cigarette stick. Alternatively, in some other variant embodiments, the aerosol generating article 1000 may be in a longitudinal shape of an elliptic column, a square column, a polygonal column, or the like. In some embodiments, an appearance of the aerosol generating article 1000 may imitate an appearance of a conventional cigarette that can be ignited and inhaled. The aerosol generating article 1000 may have an outer diameter which approximately ranges from 5 mm to 12 mm (for example, approximately ranges from 5 mm to 10 mm). The aerosol generating article 1000 has a total length which approximately ranges from 40 mm to 100 mm. In optional embodiments, the aerosol generating article 1000 has a total length of approximately 45 mm to 55 mm.

In some embodiments, the aerosol generating article 1000 includes an aerosol generating substrate. The aerosol generating substrate is configured to describe a matrix which is capable of releasing volatile compounds when heated, and these volatile compounds may form an aerosol. The aerosol described herein may be visible or invisible, and may include vapor (for example, fine particles of a substance, these particles being in a gaseous state, these particles usually being liquid or solid at room temperature) and a droplet of gas and condensed vapor. The aerosol generating substrate may include, for example, one or more of the following: a powder, a particle, a pellet, a fragment, a strand, a strip, or a sheet, which contain one or more of the following: a dried flower or a fragrant leaf, a grass leaf, a tobacco leaf, a tobacco midrib, an expanded tobacco, and a homogenized tobacco.

In some embodiments, the aerosol generating article 1000 may further include a filter tip, to output the aerosol after filtering. The filter tip may generally include a porous material, such as cellulose acetate. In some embodiments, when the aerosol generating article 1000 is received in the heating device 100 for heating, the filter tip is exposed outside the heating device 100, to facilitate user inhalation.

As shown in FIG. 1, the heating device 100 includes:
a housing 10, having a proximal end 110 and a distal end 120 which are opposite to each other, where the proximal end 110 is provided with a receiving opening 111, and during use, the aerosol generating article 1000 can be received into the heating device 100 through the receiving opening 111 or removed from the heating device 100;
a battery core 140, configured to supply power; and
a circuit board 130, such as a PCB board, electrically connected to the battery core 140, where a control circuit is arranged on the circuit board 130, which is configured to control heating of the aerosol generating article 1000.

As shown in FIG. 1, the heating device 100 further includes:
a bracket 20, surrounding or defining a receiving cavity 211, to receive the aerosol generating article 1000; and
a light heater 30, electrically connected to the circuit board 130, so that the circuit board 130 can control to provide electric power of the battery core 140 to the light heater 30, where the light heater 30 can, when the circuit board 130 provides electric power, radiate light rays toward the aerosol generating article 1000, to heat the aerosol generating article 1000 through the light.

As shown in FIG. 1, a stopping structure 22 is further arranged in the heating device 100, for example, a protrusion or an abutting step which is arranged on an inner wall of the bracket 20. When the aerosol generating article 1000 is received in the receiving cavity 211 and/or in the bracket 20, the aerosol generating article 1000 is stopped by abutting against the stopping structure 22.

As shown in FIG. 1, a diameter of the receiving cavity 211 is greater than a diameter of the aerosol generating article 1000. When the aerosol generating article 1000 is received in the receiving cavity 211, a gap is defined along a radial direction between the aerosol generating article and an inner surface of the bracket 20. In some embodiments, a gap of about 1 mm to 5 mm is defined between the aerosol generating article 1000 and the inner surface of the bracket 20 along the radial direction of the receiving cavity 211. As shown in FIG. 1, a shielding or sealing element 21 such as an O-ring is further arranged in the bracket 20 and is arranged close to the receiving opening 111. When the aerosol generating article 1000 is received in the receiving cavity 211, the sealing element 21 elastically abuts between the aerosol generating article 1000 and the inner surface of the bracket 20, mainly blocking, on one hand, the light emitted by the light emitter 30 to prevent the light from emitting out of the receiving opening 111 from between the aerosol generating article 1000 and the inner surface of the bracket 20 to the outside. According to another aspect, the sealing element 21 clamps or retains the aerosol generating article 1000 along a radial direction.

As shown in FIG. 1, the light heater 30 is supported and held by a bracket 20. The light heater 30 is arranged aligned with the receiving cavity 211 along the longitudinal direction of the heating device 100. As shown in FIG. 1, the light heater 30 is closer to the distal end 120 than the receiving cavity 211. During use, the light heater 30 emits light toward the proximal end 110 and/or the receiving cavity 211.

In the embodiment shown in FIG. 1, the light heater 30 is configured in a form of a lamp bead. In some optional embodiments, the light heater 30 is substantially a spherical lamp bead. The light heater 30 has a diameter or width size of about 3 mm to 7 mm. Alternatively, the light heater 30 may approximately be a point light source.

As shown in FIG. 1, when the aerosol generating article 1000 is received in the receiving cavity 211, the light heater 30 and the aerosol generating article 1000 are spaced apart. Alternatively, the light heater 30 is not in contact with the aerosol generating article 1000. In the embodiment shown in FIG. 1, along the longitudinal direction of the receiving cavity 211, when the aerosol generating article 1000a is received in the receiving cavity, a first spacing d11 is defined between the light heater 30 and the aerosol generating article 1000. The first spacing d11 is about 2 mm to 10 mm. Alternatively, the first spacing d11 is defined between the light heater 30 and the receiving cavity 211 along the longitudinal direction of the receiving cavity 211.

In some embodiments, the bracket 20 is rigid. The bracket 20 may be made of a material, such as rigid ceramics, polymer plastics, or metal. As shown in FIG. 1, the bracket 20 includes:
a first support portion 210 and a second support portion 220 arranged along a longitudinal direction, which both are substantially cylindrical or tubular. The first support portion 210 is closer to the proximal end 110 than the second support portion 220. The first support portion 210 mainly defines the receiving cavity 211 to accommodate and receive the aerosol generating article 1000. The second support portion 220 is configured to support and hold the light heater 30. After assembly, further, the light heater 30 at least partially extends into the first support portion 210.

In the embodiment shown in FIG. 1, a support arm 222 which extends along a radial direction is arranged on the second support portion 220, and the light heater 30 is held or fastened on the support arm 222.

In the embodiment shown in FIG. 1, the heating device 100 is further provided with an airflow channel, which provides a flow path for delivering air to the aerosol generating article 1000 during user inhalation, as shown by an arrow R1 in FIG. 1. Specifically, the second support portion 220 is further provided with an air inlet 221, which is configured for air to enter the second support portion 220 during inhalation. In some specific embodiments, the air inlet 221 is in communication with the external atmosphere through a hole on the housing 10 and/or an assembly gap or the like, so that during inhalation, external air can pass through the housing 10 and then enter the second support portion 220 through the air inlet 221. The support arm 222 is further provided with a through hole 223 which is configured for air to pass through, to allow air in the second support portion 220 to enter the aerosol generating article 1000 in the first support portion 210.

In the embodiment shown in FIG. 1, at least part of a surface of the light heater 30 is exposed to the airflow channel. The light heater 30 is located upstream of the aerosol generating article 1000, or the aerosol generating article 1000 is located downstream of the light heater 30. Therefore, during inhalation, air at least partially flows through the light heater 30. After partially absorbing heat from the surface of the light heater 30, the air is delivered to the aerosol generating article 1000, so that the aerosol generating article 1000 is subjected to auxiliary heating through hot air in addition to photothermal heating. Terms "upstream" and "downstream" are used for a relative direction in which a user inhales an aerosol generating article 1000 during use. The downstream may refer to a direction toward a user during inhalation, and correspondingly, the upstream refers to a direction away from a user. In addition, the upstream is a direction in which air enters, and the downstream is a direction in which air flows out.

In the embodiment shown in FIG. 1, the second support portion 220 is further provided with:
a receiving wall 230, arranged perpendicular to an axial direction of the second support portion 220 and away from the first support portion 210. The receiving wall 230 is configured to receive debris, condensate, and the like derived from the aerosol generating article 1000. The second support portion 220 further includes a tubular extension portion 231 which extends outward along a radial direction. A conductive lead of a light heater 30 passes through the tubular extension portion 231 and then is electrically connected to the circuit board 130.

During use, the bracket 20 as a whole, the first support portion 210 or the second support portion 220 may be separately detached, facilitating a user to clean residues and the like therefrom.

According to FIG. 1, as shown by an arrow R2 in FIG. 1, part of the light emitted by the light heater 30, which is substantially a point light source, directly irradiates or radiates to an upstream end portion of the aerosol generating article 1000 and is absorbed by the aerosol generating article 1000. Another part of the light, as shown by an arrow R3 in FIG. 1, irradiates onto an inner surface of the first support portion 210 and then is reflected to a peripheral side surface of the aerosol generating article 1000 and absorbed by the aerosol generating article 1000.

Therefore, as shown in FIG. 1, at least part of the inner surface of the first support portion 210 is arranged obliquely, facilitating formation of an optical path shown by the arrow R3 through reflection. Alternatively, in a more specific embodiment, a part of the inner surface of the first support portion 210 radially opposite to the aerosol generating article 1000 is inclined. Alternatively, in a more specific embodiment, an inner diameter of at least part of the first support portion 210 decreases in a direction close to the proximal end 110 and/or the receiving opening 111, facilitating formation of an optical path shown by the arrow R3 through reflection.

In some embodiments, at least part of the inner surface of the bracket 20 and/or the first support portion 210 is reflective to reflect light irradiating to the bracket 20 and/or the first support portion 210 toward the aerosol generating article 1000. In some specific embodiments, reflection of at least part of the inner surface of the bracket 20 and/or the first support portion 210 may be enabled by spraying a reflective coating, thin film, or the like. The reflective coating or thin film may include metal, such as silver, aluminum, tin, and stainless steel.

As shown in FIG. 1 and FIG. 2, the light heater 30 in this embodiment includes:
a light-transmissive cover 31, defining an outer surface of the light heater 30, where the light-transmissive cover 31 is hollow, and a sealed cavity 33 is formed in the light-transmissive cover 31; and
a light-emitting element 32, located in the cavity 33, where the light-emitting element 32 is not in contact with the light-transmissive cover 31, and the light-emitting element 32 is held or connected by welding between a first conductive lead 341 and a second conductive lead 342, and is supported and guided with a current by the first conductive lead 341 and the second conductive lead 342. The first conductive lead 341 and the second conductive lead 342 extend, from the cavity 33, out of the light-transmissive cover 31, and then are electrically connected to the circuit board 130.

In the embodiments shown in FIG. 1 and FIG. 2, the light-emitting element 32 is an electroluminescent element and can emit light when electric power is provided by the circuit board 130. In an embodiment, the light-emitting element 32 is substantially configured to be in a form of a solenoid coil; and the diameters of the first conductive lead 341 and the second conductive lead 342 are greater than the diameter of the wire material of the light-emitting element 32. In some specific embodiments, the axis of the light-emitting element 32 in the form of a solenoid coil is perpendicular to the longitudinal direction of the aerosol generating article 1000 and/or the receiving cavity 211. In some specific embodiments, the light-emitting element 32 in the form of a solenoid coil has about 3 to 8 windings and a length of about 2 mm to 5 mm. The wire material of the light-emitting element 32 has a diameter of about 0.05 mm to 0.4 mm.

In some embodiments, the wire material of the light-emitting element 32 may include a tungsten wire, a carbon fiber wire, a tin oxide wire, or the like. Alternatively, in some other variant embodiments, the wire material of the light-emitting element 32 is composed of an oxide of at least one metal element such as Mg, Al, Ti, Zr, Mn, Fe, Co, Ni, Cu, Cr, and Zn. Alternatively, in some other variant embodiments, the wire material of the light-emitting element 32 may include a light-emitting metal or alloy, for example, an Fe-Mn-Cu based alloy. In a specific embodiment, the light-emitting element 32 is a tungsten wire; or the light-emitting element 32 is composed of a tungsten wire which has a purity of above 99%.

Correspondingly, the first conductive lead 341 and the second conductive lead 342 may be silver, copper, or gold, or an alloy thereof, and the like.

In some embodiments, the light-transmissive cover 31 may be made of a high-temperature-resistant and light-transmissive material such as quartz, glass, ceramic, or mica; Preferably, the light-transmissive cover may be made of a transparent material. For example, when the light-transmissive cover 31 made of a quartz material is used, the transmittance for the light emitted by the light-emitting element 32 is above 90%. In a more preferred embodiment, when the light-transmissive cover 31 made of high-purity quartz is used, the transmittance for the light emitted by the light-emitting element 32 is above 95%.

In some embodiments, the light-emitting element 32 can be supplied with electric power by the circuit board 130 and then generate heat through resistance Joule heat, and emit light at a working temperature of 450°C to 2800°C. More preferably, the light-emitting element 32 can emit light at a working temperature of 800°C to 2500°C. More preferably, the light-emitting element 32 can emit light at a working temperature of 1300°C to 2500°C. More preferably, the light-emitting element 32 can emit light at a working temperature of 1500°C to 2500°C, and the emitted light wave range facilitates heating of the aerosol generating substrate. Alternatively, in a more preferred specific embodiment, the light-emitting element 32 can emit light at a working temperature of 2000°C to 2500°C, and the emitted light wave range facilitates heating of the aerosol generating substrate. In some specific embodiments, the working temperature of the light-emitting element 32 is 2000°C to 2500°C.

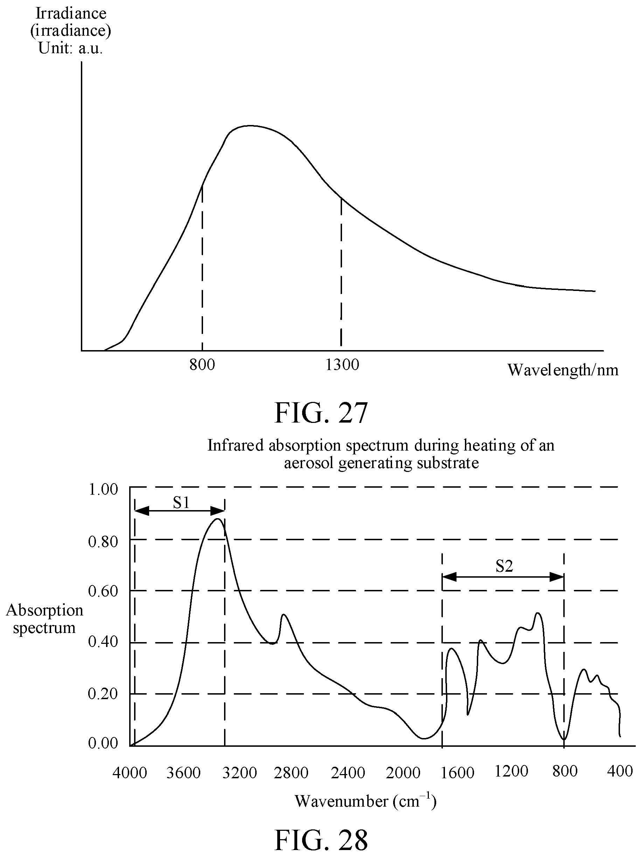

FIG. 27 is a spectrum diagram of light emitted by the light-emitting element 32 at about 2300°C according to an embodiment. A wavelength range of the light emitted by the light-emitting element 32 is in a range of 200 nm to 3500 nm. The light emitted by the light-emitting element 32 is substantially infrared light. Light having a wavelength of 800 nm to 1300 nm in the light emitted by the light-emitting element 32 accounts for more than 50% of all the light. Alternatively, in some other embodiments, light having a wavelength of 800 nm to 1300 nm in the light emitted by the light-emitting element 32 accounts for more than 60% of all the light, and this facilitates heating of the aerosol generating article 1000.

In some embodiments, when the light-emitting element 32 emits light at a working temperature of 1500°C to 2800°C, the light-transmissive cover 31 absorbs or transfers heat originating from the light-emitting element 32 so as to have a temperature of 300°C to 600°C. When the light-transmissive cover 31 reaches 300°C to 600°C, it can further emit infrared light of a greater wavelength to supplement or assist in heating the aerosol generating article 1000. Therefore, the aerosol generating substrate of the aerosol generating article 1000 may simultaneously be heated through matched excitation by light excited after the light-transmissive cover 31 is heated, and be subjected to dislocated excitation through the light emitted by the light-emitting element 32, and this facilitates a heating effect.

For example, FIG. 28 is a schematic diagram of an infrared absorption spectrum measured in an embodiment when an aerosol generating substrate of an aerosol generating article 1000 is heated by a light heater 30. As shown in FIG. 28, approximately a first absorption peak S1 and a second absorption peak S2 occur during absorption of light by the aerosol generating substrate. Further, during photothermal heating, the aerosol generating substrate of the aerosol generating article 1000 may be heated through matched excitation with light for the second absorption peak S2 and heated through dislocated excitation with light for the first absorption peak S1. The light for the second absorption peak S2 is mainly infrared light radiated by excitation of the light-transmissive cover 31 at 300°C to 600°C and after matching with tobacco components and aroma substance molecules on a surface layer of the aerosol generating substrate of the aerosol generating article 1000, enables resonant excitation, so that heating is enabled. The light for the first absorption peak S1 is light mainly emitted from a light-emitting element 32 at a working temperature of 1500°C to 2800°C, and has a relatively shorter wavelength (which is in a reciprocal relationship with a wavenumber), thereby having high penetrating power to penetrate into tobacco components inside the aerosol generating article 1000 and to crack the tobacco components through thermal effect to generate an aerosol, namely, dislocated excitation.

In some embodiments, an output voltage of a battery core 140 may be about 3.7 V to 4.5 V. When the light-emitting element 32 has a resistance value of about 0.1 Ω to 0.6 Ω at a working temperature of 1500°C to 2800°C. During operation, the light-emitting element 32 has a working power of about 20 W to 60 W. The light-emitting element 32 has a positive temperature coefficient of resistance. Therefore, during use, a control circuit can determine a temperature of the light-emitting element 32 by measuring the resistance of the light-emitting element 32.

In some embodiments, halogen is filled in the cavity 33 of the light-transmissive cover 31, for example, iodine vapor. In some specific embodiments, 1 × 10-6 to 1 × 10-2 µmol/mm3 halogen is sealed in the cavity 33. Alternatively, in some embodiments, an inert gas is filled into the cavity 33 of the light-transmissive cover 31, for example, argon or helium.

Alternatively, in some embodiments, a pressure in the cavity 33 of the light-transmissive cover 31 is less than a pressure outside the light-transmissive cover 31. In other words, the cavity 33 has a degree of vacuum. In some specific embodiments, the pressure in the cavity 33 is less than 0.85 atm.

As shown in FIG. 2, the light-transmissive cover 31 includes a first portion 311 and a second portion 312. After assembly, the first portion 311 is located in the first support portion 210, and the second portion 312 is located in the second support portion 220. After assembly, the light-transmissive cover 31 is supported by being clamped and supported by the support arm 222 between the first portion 311 and the second portion 312.

In the embodiment shown in FIG. 2, the first portion 311 and the second portion 312 are both curved surfaces or arc surfaces and have opposite bending directions. The first portion 311 has a greater curvature than the second portion 312. A heat dissipation part 313 is arranged on the second portion 312. The heat dissipation part 313 may be, for example, a radiating fin which extends outward from a surface of the second portion 312 to perform heat dissipation for the light-transmissive cover 31. In some embodiments, the heat dissipation part 313 is integrally molded with the light-transmissive cover 31. Therefore, the heat dissipation part 313 and the light-transmissive cover 31 are non-detachable or non-separable.

Alternatively, in some other variant embodiments, the second portion 312 is reflective. For example, a reflective coating such as silver, mercury, or aluminum is formed on an outer surface of the second portion 312 by spraying, deposition, and the like. Further, the second portion 312 is configured to reflect the light emitted by the light-emitting element 32 toward the first portion 311, helping improve light utilization efficiency. In some embodiments, the second portion 312 has a cross-sectional shape that is substantially parabolic, facilitating reflection of the light emitted by the light-emitting element 32 toward the first portion 311.

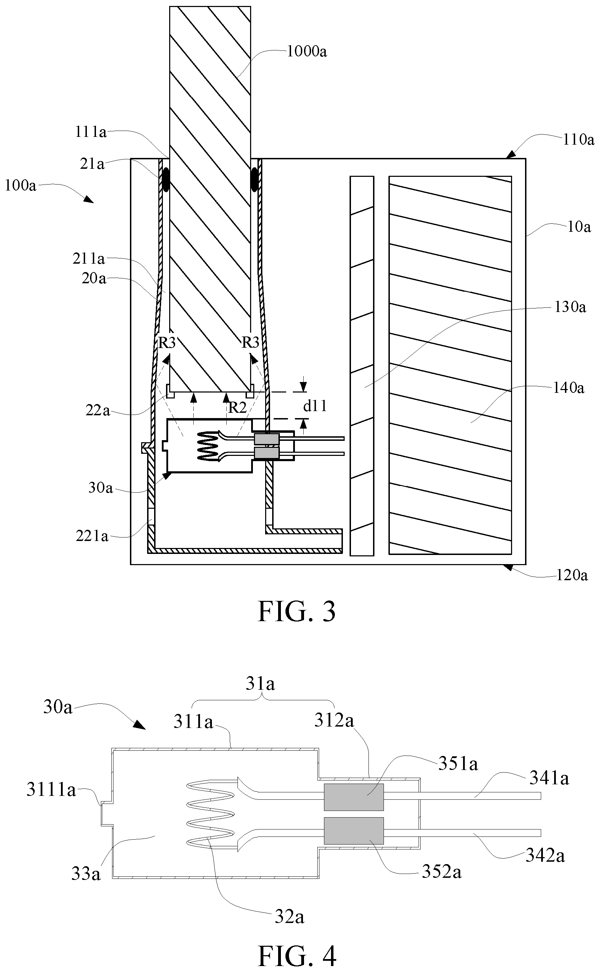

FIG. 3 is a schematic diagram of an aerosol generating system according to another embodiment. In this embodiment, the aerosol generating system includes:
an aerosol generating article 1000a; and
a heating device 100a, configured to receive and heat the aerosol generating article 1000a to generate an aerosol. In this embodiment, the heating device 100a includes:
   a housing 10a, provided with a receiving opening 111a located at a proximal end 110a, so that the aerosol generating article 1000a is allowed to be removably received in the heating device 100a through the receiving opening 111a;
   a battery core 140a and a circuit board 130a;
   a bracket 20a, substantially configured as a shape of a canister which extends along a longitudinal direction of the housing 10a, where a receiving cavity 211a is defined in the bracket 20a, to accommodate and receive the aerosol generating article 1000a; and a diameter of the receiving cavity 211a is greater than a diameter of the aerosol generating article 1000a, so that a spacing may be formed between the aerosol generating article 1000a and the bracket 20a when the aerosol generating article is received in the receiving cavity 211a;
   a stopping structure 22a, for example, a protrusion or an abutting step arranged on an inner wall of the bracket 20a, so that an upstream end portion of the aerosol generating article 1000a is allowed to provide stopping by abutting against the stopping structure 22a;
   a sealing element 21a, elastically abutting between the aerosol generating article 1000a and an inner surface of the bracket 20a, where the sealing element 21a is arranged close to the receiving opening 111a, and blocks the light emitted by the light emitter 30a, to prevent the light from being emitted from between the aerosol generating article 1000a and the inner surface of the bracket 20a to the outside of the receiving opening 111a; and
   an air inlet 221a, provided close to a distal end 120a, so that air is allowed to enter the bracket 20a during inhalation.

As shown in FIG. 3 to FIG. 5, the heating device 100a further includes:
a light heater 30a, configured to emit light to the aerosol generating article 1000a, to heat the aerosol generating article 1000a. In this embodiment, the light heater 30a is in a longitudinal shape, rather than a shape of a spherical lamp bead. In this embodiment, an axis of the light heater 30a is perpendicular to the longitudinal direction of the bracket 20a and/or the receiving cavity 211a.

In this embodiment, the light heater 30a includes:
a light-transmissive cover 31a, made of a heat-resistant light-transmissive material such as quartz, glass, or ceramic, where the light-transmissive cover 31a includes a first portion 311a and a second portion 312a which are arranged one by one along the longitudinal direction; and a cavity 33a is formed in the first portion 311a; and
a light-emitting element 32a, arranged in the cavity 33a, configured to emit light, where the light-emitting element 32a is made of a luminescent material such as a tungsten wire, a carbon fiber wire, and a tin oxide wire, and is supplied with electric power by the circuit board 130a to generate heat by resistance Joule heat, and emits light having a wavelength of 200 nm to 3500 nm at a working temperature of 450°C to 2800°C. More preferably, the light-emitting element 32a can emit light at a working temperature of 800°C to 2500°C. More preferably, the light-emitting element 32a can emit light at a working temperature of 1300°C to 2500°C. In this embodiment, the light-emitting element 32a is likewise configured to be in a form of a solenoid coil which is formed by a wire material. The light-emitting element 32a in the form of a solenoid coil has about 3 to 8 windings and a length of about 2 mm to 5 mm. In this embodiment, an axis of the light-emitting element 32a in the form of a solenoid coil is parallel to the longitudinal direction of the aerosol generating article 1000a and/or the receiving cavity 211a. Two ends of the light-emitting element 32a extend out of the light-transmissive cover 31a through a first conductive lead 341a and a second conductive lead 342a welded thereto, and are then connected to the circuit board 130a, to supply electric power to the light-emitting element 32a.

As shown in FIG. 3 to FIG. 5, the light-transmissive cover 31a is substantially in a shape of a column. For example, the first portion 311a is a cylindrical shape, and an outer surface of the cylinder facilitates emitted light to irradiate outward at a wide angle. The second portion 312a is a non-cylinder shape, for example, a shape of a square column in FIG. 3 to FIG. 5. During installation and fixation, the bracket 20a and/or the heating device 100a holds or supports the second portion 312a, facilitating the light heater 30a to be securely mounted in the heating device 100a. A width size of the second portion 312a is smaller than a diameter of the first portion 311a.

As shown in FIG. 3 to FIG. 5, the first conductive lead 341a and the second conductive lead 342a pass through the second portion 312a from the cavity 33a and extend out of the light-transmissive cover 31a. A sealing material is arranged in the second portion 312a, for example, a first sealing material 351a and a second sealing material 352a. The first sealing material 351a and the second sealing material 352a are respectively configured to enable sealing between the first conductive lead 341a and the second conductive lead 342a, to prevent the first conductive lead 341a and the second conductive lead 342a from forming a gap with the second portion 312a to destroy air tightness of the light-transmissive cover 31a.

In some embodiments, the first sealing material 351a and the second sealing material 352a are metal which can withstand a high temperature of at least 800°C, for example, molybdenum, titanium, or an alloy thereof. In some specific embodiments, during preparation, the first conductive lead 341a and the second conductive lead 342a are wrapped with a molybdenum sheet or a titanium alloy sheet, and then high-temperature welding is performed to enable the first conductive lead 341a and the second conductive lead 342a are tightly coupled to the inner surface of the second portion 312a through the molybdenum sheet or the titanium alloy sheet to enable sealing.

In some embodiments, the cavity 33a of the light-transmissive cover 31a is hermetically sealed. In some embodiments, halogen is filled in the cavity 33a of the light-transmissive cover 31a, for example, iodine vapor. Alternatively, in some other embodiments, an inert gas is filled in the cavity 33a of the light-transmissive cover 31a. Alternatively, in some other embodiments, a pressure of the cavity 33a of the light-transmissive cover 31a is less than a pressure outside the light-transmissive cover 31a. In other words, the cavity 33a has a degree of vacuum. For example, the pressure of the cavity 33a of the light-transmissive cover 31a is less than 0.85 atm.

As shown in FIG. 3 to FIG. 5, at least one protrusion 3111a is arranged on an end of the first portion 311a of the light-transmissive cover 31a away from the second portion 312a. In some embodiments, the protrusion 3111a is a by-product formed by hot melting of a portion where a needle of an inflation equipment or a vacuum-pumping apparatus penetrates through the light-transmissive cover 31a to perform vacuum pumping on or inject gas to the cavity 33a and then is pulled out.

As shown in FIG. 3, the light heater 30a is also substantially a point light source, and emitted light is substantially radiated radially outward with the light-emitting element 32a as a center. Therefore, during heating, part of the light emitted by the light heater 30a directly irradiates an upstream end portion of an aerosol generating article 1000a, and another part of the light irradiates an inner surface of a bracket 20a and then is reflected to an outer side surface of the aerosol generating article 1000a, to heat the aerosol generating article 1000a.

As shown in FIG. 3, the light heater 30a is not in contact with the aerosol generating article 1000a. Therefore, the light heater 30a does not heat the aerosol generating article 1000a through heat conduction with contact. Specifically, for example, as shown in FIG. 3, along a longitudinal direction of a receiving cavity, when the aerosol generating article 1000a is received in the receiving cavity, a first spacing d11 is defined between the light heater 30a and the aerosol generating article 1000a. The first spacing d11 is about 2 mm to 10 mm.

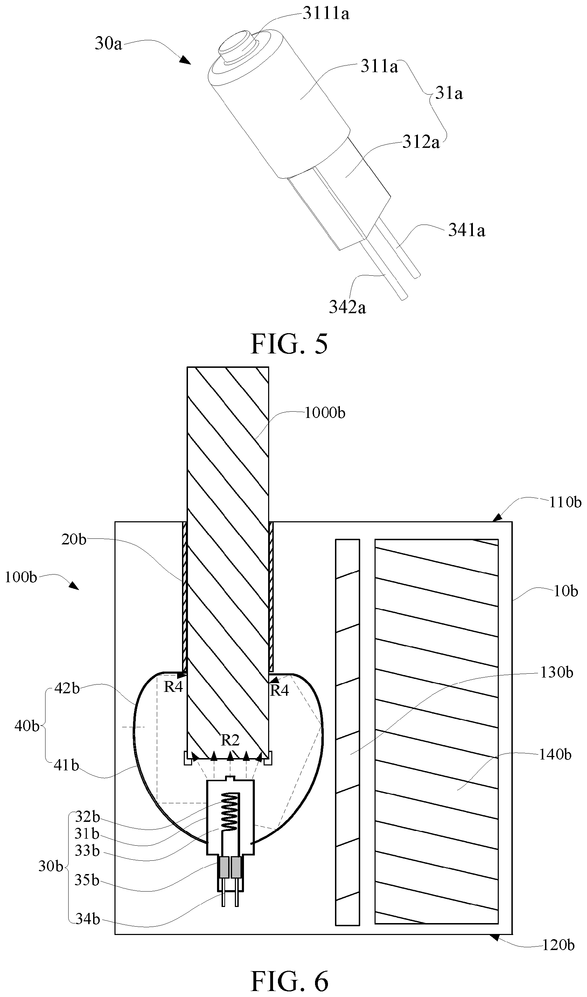

FIG. 6 is a schematic diagram of an aerosol generating system according to another embodiment. In this embodiment, a heating device 100b of the aerosol generating system includes:
a bracket 20b, surrounding or defining a receiving cavity, to receive and accommodate an aerosol generating article 1000b; and
a light heater 30b, configured to heat the aerosol generating article 1000b by emitting light toward the aerosol generating article 1000b. In this embodiment, the light heater 30b is substantially arranged extending along a longitudinal direction of the bracket 20b and/or the aerosol generating article 1000b and is spaced apart from the aerosol generating article 1000b. In this embodiment, the light heater 30b includes a light-transmissive cover 31b, and a light-emitting element 32b located in a cavity 33b of the light-transmissive cover 31b. The light-emitting element 32b is configured in a form of a solenoid coil. Two ends of the light-emitting element 32b extend out of the light-transmissive cover 31b through welded conductive leads 34b and then are connected to a circuit board 130b to supply power to the light-emitting element 32b. A sealing material 35b is used for sealing, through wedding, between the conductive lead 34b and the light-transmissive cover 31b.

As shown in FIG. 6, the heating device 100b further includes:
a light guide 40b, configured to guide part of the light emitted by the light heater 30b during use to an outer side surface of the aerosol generating article 1000b. The light guide 40b is configured to be arranged around at least part of the light heater 30b. The light guide 40b mainly guides, through reflection, light emitted by a quasi point light source to the outer side surface of the aerosol generating article 1000b. The light guide 40b is located outside the light heater 30b, or the light heater 30b is enclosed in the light guide 40b.

In an embodiment, an inner surface and/or an outer surface of the light guide 40b is defined by a reflective material. For example, the light guide 40b is made of mercury, silver, aluminum, stainless steel, or the like which has a bright surface. Alternatively, in some embodiments, the light guide 40b includes a base such as glass, and a reflective coating, for example, a mercury coating, deposited or sprayed on the base.

In some embodiments, part of the light emitted by the light heater 30b as a quasi point light source directly irradiates an upstream end portion of an aerosol generating article 1000b as shown by an arrow R2 in FIG. 6, and another part of the light is guided to an outer side surface of the aerosol generating article 1000b through the inner surface of the light guide 40b after at least one time or more times of reflection, as shown by an arrow R4 in FIG. 6. This facilitates improvement of utilization of light emitted by a light heater 30b.

In some embodiments, the light guide 40b includes a first light-guiding portion 41b and a second light-guiding portion 42b. Specifically, the first light-guiding portion 41b surrounds the light heater 30b, and the second light-guiding portion 42b extends from the first light-guiding portion 41b to the outer side surface of the aerosol generating article 1000b.

In some embodiments, the first light-guiding portion 41b has a cross-sectional shape that is approximately parabolic. The light heater 30b is substantially arranged at or near a focus (a geometric term) position of the parabolic cross section of the first light-guiding portion 41b. Such an arrangement facilitates improvement of utilization of light emitted by the light heater 30b as much as possible.

In some embodiments, the second light-guiding portion 42b is mainly configured to further reflect and guide, toward the outer side surface of the aerosol generating article 1000b, light reflected from the first light-guiding portion 41b toward a proximal end 110, as shown by the arrow R4 in FIG. 6. In an embodiment, at least part of the second light-guiding portion 42b is in a curved surface structure.

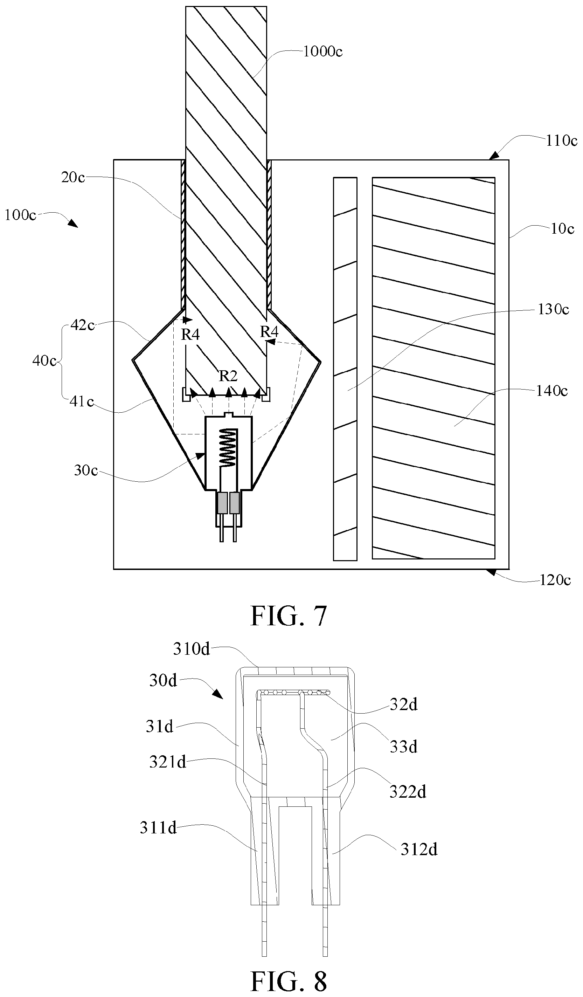

Alternatively, FIG. 7 is a schematic diagram of an aerosol generating system according to another embodiment. In this embodiment, a heating device 100c includes:
a light heater 30c, configured to heat the aerosol generating article 1000c received in the receiving cavity by light rays, where the light heater 30c is arranged at intervals from the receiving cavity along the longitudinal direction of the receiving cavity, and is not in contact with the aerosol generating article 1000c; and
a light guide 40c, arranged around at least part of the light heater 30c, where the light guide 40c mainly guides the light to the outer side surface of the aerosol generating article 1000c by reflecting the light emitted by the light heater 30c, which is a quasi point light source. The light guide 40c is located outside the light heater 30c, or the light heater 30c is enclosed in the light guide 40c. In some embodiments, part of the light emitted by the light heater 30c, which is a quasi point light source, directly irradiates the upstream end portion of the aerosol generating article 1000c as shown by an arrow R2 in FIG. 7, and another part of the light is guided to the outer side surface of the aerosol generating article 1000c after at least one or more reflections through the inner surface of the light guide 40c as shown by an arrow R4 in FIG. 7. This facilitates improvement of the utilization of the light emitted by the light heater 30c. In an embodiment, the inner surface of the light guide 40c is made of a reflective material. For example, the light guide 40c is made of mercury, silver, aluminum, stainless steel, or the like which has a bright surface. Alternatively, in some embodiments, the light guide 40c includes a substrate such as glass, and a reflective coating such as a mercury coating which is deposited or sprayed in the substrate.

In the embodiment shown in FIG. 7, the light guide 40c includes a first light-guiding portion 41c and a second light-guiding portion 42c. Specifically, the first light-guiding portion 41c surrounds the light heater 30c, and the second light-guiding portion 42c extends from the first light-guiding portion 41c to the outer side surface of the aerosol generating article 1000c. In FIG. 7, the first light-guiding portion 41c and the second light-guiding portion 42c are both arranged obliquely. The second light-guiding portion 42c is mainly configured to further reflect and guide, toward the outer side surface of the aerosol generating article 1000c, the light reflected from the first light-guiding portion 41c toward the proximal end 110c, as shown by the arrow R4 in FIG. 7.

In the embodiment shown in FIG. 7, the first light-guiding portion 41c and/or the second light-guiding portion 42c may be in a tapered shape. An included angle between the first light-guiding portion 41c and the second light-guiding portion 42c is an obtuse angle. More preferably, the included angle between the first light-guiding portion 41c and the second light-guiding portion 42c ranges from 90° to 135°.

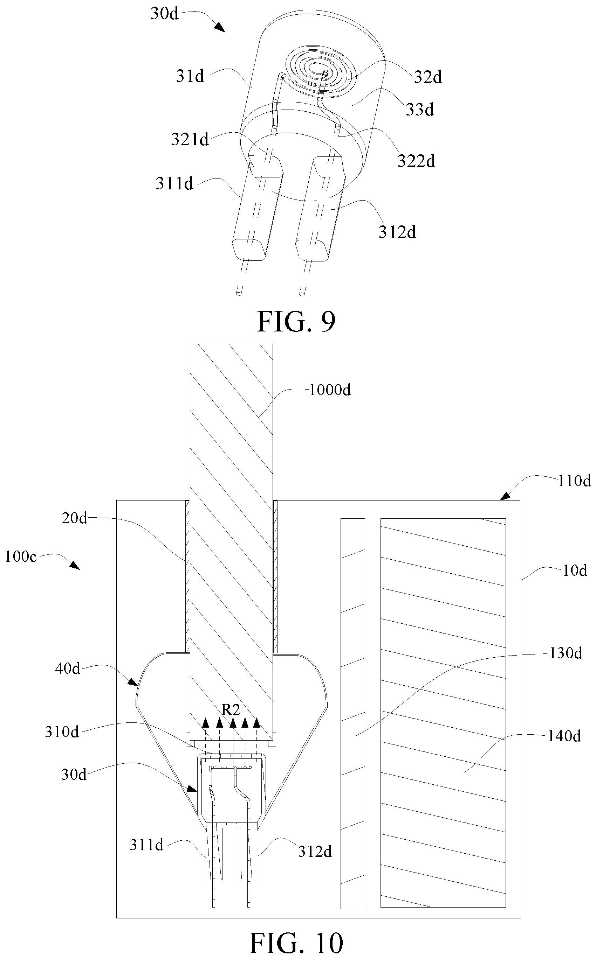

FIG. 8 and FIG. 9 are schematic diagrams of a light heater 30d according to another embodiment. In this embodiment, the light heater 30d includes:
a light-transmissive cover 31d, for example, made of a heat-resistant light-transmissive material such as quartz, glass, or ceramic. In this embodiment, the light-transmissive cover 31d is arranged to extend longitudinally. For example, the light-transmissive cover 31d may be in a shape of a column. A sealed cavity 33d is formed in the light-transmissive cover 31d.

A light-emitting element 32d is arranged in the cavity 33d and is in non-contact with the light-transmissive cover 31d. In this embodiment, the light-emitting element 32d is configured to be in a form of a planar spiral coil. The light-emitting element 32d is substantially arranged perpendicular to the longitudinal direction of the light heater 30d. In this embodiment, the light-emitting element 32d in the form of a planar spiral coil may substantially have a diameter substantially the same as that of the aerosol generating article 1000d. For example, the diameter of the light-emitting element 32d in the form of a planar spiral coil is 4 mm to 10 mm.

As shown in FIG. 8 and FIG. 9, the light-transmissive cover 31d has a first end surface 310d, and the first end surface 310d is substantially a flat plane. The light-emitting element 32d in the form of a planar spiral coil is substantially arranged parallel to the first end surface 310d. As shown in FIG. 8 and FIG. 9, a first extension portion 311d and a second extension portion 312d which extend away from the first end surface 310d along the longitudinal direction are arranged on the light-transmissive cover 31d. During installation or assembly, the heating device 100d may provide retention for the light heater 30d by being combined with the first extension portion 311d and the second extension portion 312d, to enable the light heater 30d to be stably mounted in the heating device 100d.

As shown in FIG. 8 and FIG. 9, two ends of the light-emitting element 32d are connected with a first conductive lead 321d and a second conductive lead 322d. The first conductive lead 321d extends, from the cavity 33d, through the first extension portion 311d, out of the light-transmissive cover 31d, and the second conductive lead 322d extends, from the cavity 33d, through the second extension portion 312d, out of the light-transmissive cover 31d. During use, parts of the first conductive lead 321d and the second conductive lead 322d which extend out of the light-transmissive cover 31d are connected to the circuit board 130d, to supply electric power to the light-emitting element 32d.

In the embodiments shown in FIG. 8 and FIG. 9, the light-emitting element 32d in the form of a planar spiral coil is spirally wound from wire materials such as a tungsten wire and a carbon fiber wire. Alternatively, the light-emitting element 32d is substantially planar.

Alternatively, in some other variant embodiments, the light-emitting element 32d is formed by printing, depositing, or spraying a slurry containing the above luminescent materials on a planar base. Alternatively, the light-emitting element 32d includes:
a substantially planar base, and a light-emitting track or a light-emitting coating formed on the base by printing, depositing, or spraying. The light-emitting track or the light-emitting coating may include the foregoing luminescent materials, such as tungsten, tin oxide, and a carbon fiber. The base may include heat-resistant rigid materials such as quartz, glass, or ceramic. The light-emitting track or the light-emitting coating formed by printing, depositing, or spraying may be in a shape of a planar spiral coil, a shape extending in a zigzag bend, or a shape of a patterned track, and the like.

FIG. 10 is a schematic diagram of the heating device 100d of FIG. 8 and FIG. 9 according to an embodiment. In this embodiment, when the light heater 30d is mounted in the heating device 100d, the first end surface 310d of the light-transmissive cover 31d faces the aerosol generating article 1000d, and is spaced apart from the aerosol generating article 1000d. The light emitted by the light-emitting element 32d is mostly irradiated from the first end surface 310d to the upstream end surface of the aerosol generating article 1000d, for example, as shown by an arrow R2 in FIG. 10.

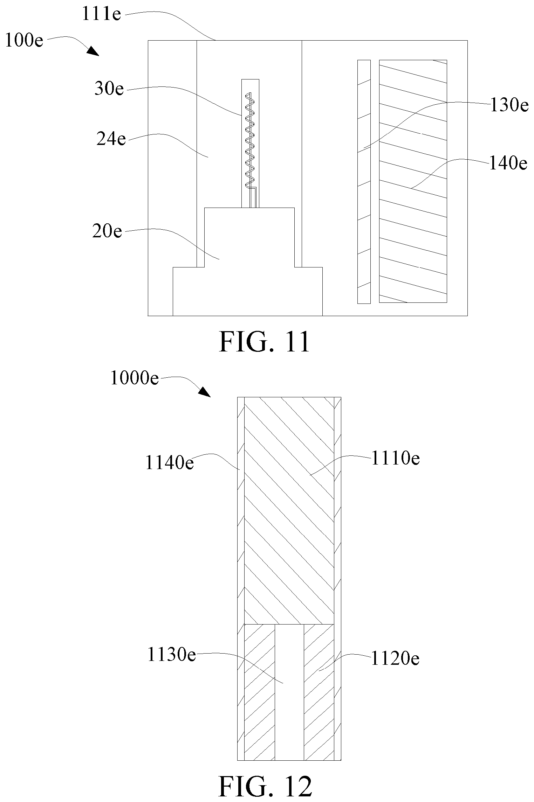

Alternatively, FIG. 11 to FIG. 13 are schematic diagrams of an aerosol generating system according to another embodiment. In this embodiment, the heating device 100e of the aerosol generating system includes:
a receiving opening 111e and a receiving cavity 24e, to removably receive an aerosol generating article 1000e; and
a light heater 30e, configured to be a pin which extends at least partially from a base 20e into the receiving cavity 24e, or in a shape of a column or a rod or a bar.

In this embodiment, the aerosol generating article 1000e includes at least:
a plurality of elements arranged from the upstream end to the downstream end: an aerosol generating substrate 1200e and a filter element 1110e. The aerosol generating substrate 1200e and the filter element 1110e are wrapped and confined by an outer wrapping 1140e.

The filter element 1110e is configured to perform filtering before the aerosol is delivered to the user. In the embodiment shown in FIG. 12, the filter element 1110e includes a conventional cellulose acetate or polypropylene tow filter tip with low filtration efficiency. The outer wrapping 1140e is conventional cigarette paper, a fiber material, an organic polymer, and the like.

The aerosol generating substrate 1200e is close to the upstream end. The aerosol generating substrate 1200e is used to describe a matrix which can release volatile compounds when heated, and these volatile compounds may form an aerosol. The aerosol described herein may be visible or invisible, and may include vapor (for example, fine particles of a substance, these particles being in a gaseous state, these particles usually being liquid or solid at room temperature) and a droplet of gas and condensed vapor. The aerosol generating substrate 1200e may include, for example, one or more of the following: a powder, a particle, a pellet, a fragment, a strand, a strip, or a sheet, which contain one or more of the following: a dried flower or a fragrant leaf, a grass leaf, a tobacco leaf, a tobacco midrib, an expanded tobacco, and a homogenized tobacco. In an optional embodiment, the aerosol generating substrate 1200e includes an aggregated sheet of a crimped homogenized tobacco material, and the crimped homogenized tobacco material is confined by the outer wrapping 1140e. The aggregated sheet of a crimped homogenized tobacco material includes glycerol which serves as an aerosol former.

In the embodiment shown in FIG. 12, the aerosol generating substrate 1200e is substantially in a shape of a ring. A central hole 1130e is defined in the aerosol generating substrate 1200e. In some embodiments, the aerosol generating substrate 1200e has a length of about 10 mm to 20 mm. A diameter of the central hole 1130e is about 3 mm to 5 mm.

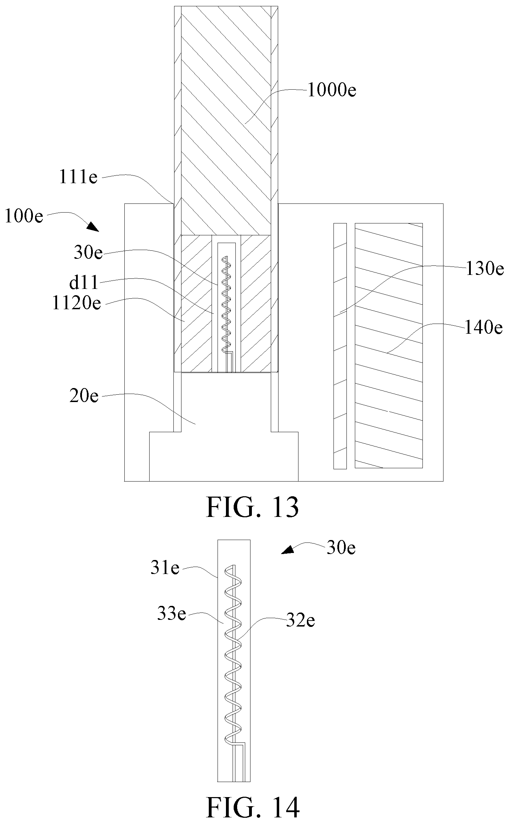

As shown in FIG. 13, when the aerosol generating substrate 1200e is received in the receiving cavity 24e of the heating device 100e, the light heater 30e can extend into the central hole 1130e of the aerosol generating substrate 1200e and emit light rays toward the aerosol generating substrate 1200e to heat the aerosol generating substrate 1200e. In the embodiment shown in FIG. 13, when the light heater 30e extends into the central hole 1130e of the aerosol generating substrate 1200e and heats the substrate, the light heater 30e is not in contact with an inner surface of the aerosol generating substrate 1200e. In some embodiments, a first spacing d11 between the light heater 30e and the inner surface of the aerosol generating substrate 1200e is greater than 1 mm. For example, in a specific embodiment, the first spacing d11 between the light heater 30e and the inner surface of the aerosol generating substrate 1200e ranges from 1 mm to 5 mm. Thus, this prevents the light heater 30e from heating the aerosol generating substrate 1200e in a direction of heat conduction with contact. The first spacing d11 is a gap or a spacing formed between the aerosol generating substrate 1200e and the light heater 30e along a radial direction of the aerosol generating substrate and/or the light heater.

As shown in FIG. 14, the light heater 30e includes:
a light-transmissive cover 31e, for example, made of a light-transmissive material such as quartz or glass, and configured as an elongated pin, or in a shape of a column or a rod or a bar or the like, where a sealed cavity 33e is formed in the light-transmissive cover 31e; and
a light-emitting element 32e, located in the cavity 33e and in non-contact with the light-transmissive cover 31e, where the light-emitting element 32e is configured in a form of a solenoid coil which extends along a longitudinal direction of the light-transmissive cover 31e.

Alternatively, in some other variant embodiments, the light-emitting element 32e may be in contact with the light-transmissive cover 31e.

In the embodiment shown in FIG. 14, a front end of the light-transmissive cover 31e is substantially flat. Alternatively, in some other embodiments, the front end of the light-transmissive cover 31e is configured in a shape of a tapered tip.

In some embodiments, the light-transmissive cover 31e has an outer diameter of about 1.5 mm to 4 mm. The light-transmissive cover 31e has a wall thickness of about 0.1 mm to 0.5 mm.

In some embodiments, the light-emitting element 32e has a diameter of about 1 mm to 3 mm. The light-emitting element 32e has a length of about 8 mm to 15 mm. The light-emitting element 32e is made of luminescent materials, such as a tungsten wire, a carbon fiber wire, and a tin oxide wire, and emits light at a working temperature of 450°C to 2800°C. In this embodiment, the light-emitting element 32e has a length, so that the light heater 30e is substantially a line light source. Alternatively, in an embodiment, the light heater 30e is configured as an elongated lamp tube.

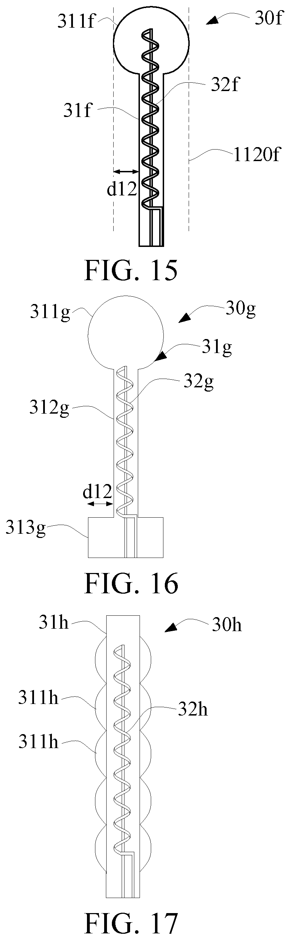

Alternatively, FIG. 15 is a schematic diagram showing a light heater 30f according to another embodiment. In this embodiment, the light heater 30f includes:
a light-transmissive cover 31f, having an expansion portion 311f close to a front end. The expansion portion 311f may be approximately in a shape of a sphere. When the light heater 30f extends into an aerosol generating substrate 1120f of an aerosol generating article to perform photothermal heating, the expansion portion 311f may abut against and be in contact with an inner surface of the aerosol generating substrate 1120f. A second spacing d12 is defined between another part of the light-transmissive cover 31f and the inner surface of the aerosol generating substrate 1120f.

Alternatively, FIG. 16 is a schematic diagram showing a light heater 30g according to another embodiment. In this embodiment, the light heater 30g includes:
a light-transmissive cover 31g, including a first portion 311g, a second portion 312g, and a third portion 313g arranged one by one along a longitudinal direction and having different outer diameters, where a diameter of the second portion 312g is smaller than diameters of the first portion 311g and the third portion 313g; and
a light-emitting element 32g, located in the second portion 312g, where the light-emitting element 32g avoids the first portion 311g and the third portion 313g in the longitudinal direction. When the light heater 30g extends into the aerosol generating substrate 1120f and performs heating, the first portion 311g and the third portion 313g abut against the inner surface of the aerosol generating substrate 1120f, and a second spacing d12 is formed between the second portion 312g and the inner surface of the aerosol generating substrate 1120f.

Alternatively, FIG. 17 is a schematic diagram showing a light heater 30h according to another embodiment. In this embodiment, the light heater 30h includes:
a light-transmissive cover 31h, and a light-emitting element 32h located in the light-transmissive cover 31h. In this embodiment, at least one or more protruding structures 311h are arranged on an outer side surface of the light-transmissive cover 31h. The protruding structure 311h may be arc-shaped, and this is equivalent to the arrangement and formation of at least one or more collimating lenses (an optical device term) on the outer side surface of the light-transmissive cover 31h, which may form an optical effect similar to that of a collimating lens on the outer side surface of the light-transmissive cover 31h, improving utilization of uniform light.

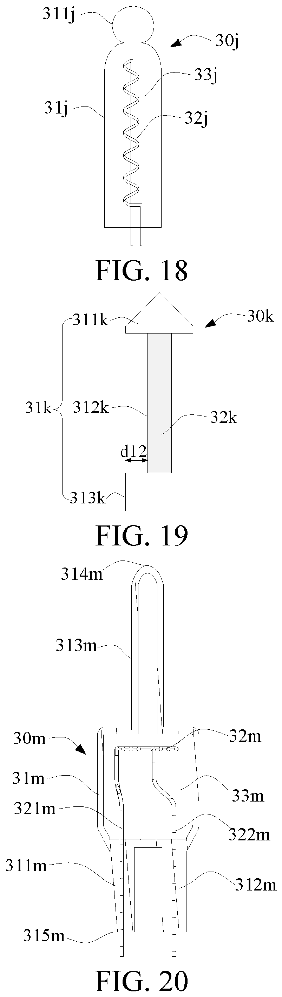

Alternatively, FIG. 18 is a schematic diagram showing a light heater 30j according to another variant embodiment. In this embodiment, a substantially spherical protrusion 311j is arranged at a front end of the light-transmissive cover 31j. In some embodiments, the protrusion 311j is a by-product formed by hot melting of a portion where a needle of an inflation equipment or a vacuum-pumping apparatus penetrates through the light-transmissive cover 31j to perform vacuum pumping on or inject gas to a cavity 33j and then is pulled out. Alternatively, in some other embodiments, the protrusion 311j is an artistic design for a visually pleasing effect. Alternatively, in some other, the front end of the light-transmissive cover 31j is smaller, which facilitates extending the light-transmissive cover 31j into an annular aerosol generating substrate 1120f from the front end.

Alternatively, FIG. 19 shows a schematic diagram of a light heater 31k according to another variant embodiment. In this embodiment, the light heater 30k includes:
a base 31k, having a first portion 311k, a second portion 312k, and a third portion 313k arranged one by one along a longitudinal direction and having different outer diameters, where a diameter of the second portion 312k is smaller than diameters of the first portion 311k and the third portion 313k, and when the light heater 30k is inserted into the aerosol generating substrate 1120f and performs heating, the first portion 311k and the third portion 313fk abut against an inner surface of the aerosol generating substrate 1120f, and a second spacing d12 is formed between the second portion 312k and the inner surface of the aerosol generating substrate 1120f; and
a light-emitting element 32k, configured to emit light, where the light-emitting element 32k is formed on or coupled to the second portion 312k of the base 31k and avoids the first portion 311k and the third portion 313k. The light-emitting element 32k is, for example, a light-emitting track or a light-emitting coating which is formed on the second portion 312k by spraying, deposition, printing, and the like.

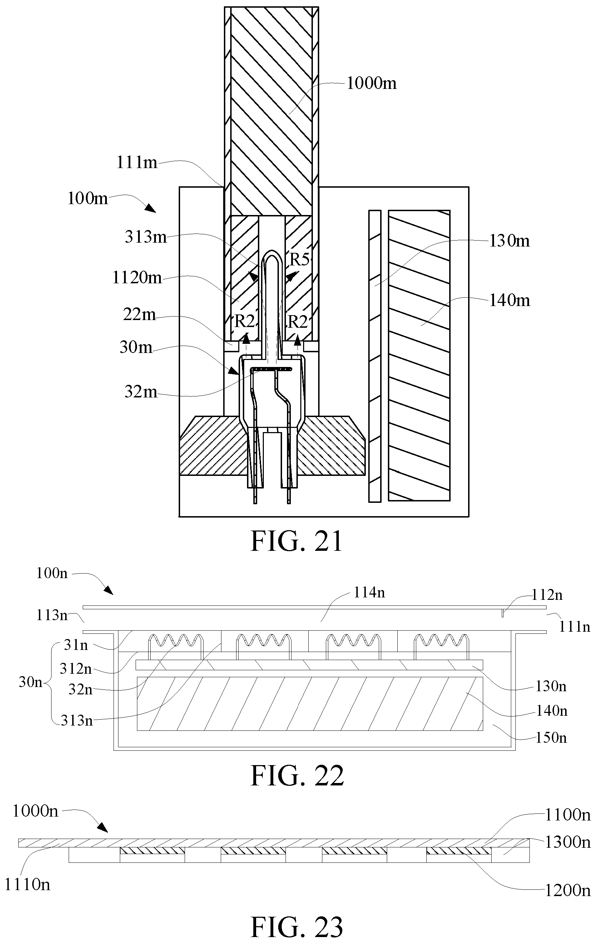

Alternatively, FIG. 20 is a schematic diagram of a light heater 30m according to another embodiment. FIG. 21 is a schematic diagram of a heating device 100m including the light heater 30m. In this embodiment, the light heater 30m includes:
a light-transmissive cover 31m, for example, made of a heat-resistant light-transmissive material such as quartz, glass, or ceramic. In this embodiment, a sealed cavity 33m is formed in the light-transmissive cover 31m. A first extension portion 311m and a second extension portion 312m which extend along the longitudinal direction toward an end and terminate at the end are arranged on the light-transmissive cover 31m. During installation or assembly, the heating device 100m may provide retention for the light heater 30m by being combined with the first extension portion 311m and the second extension portion 312m, to enable the light heater 30m to be stably mounted in the heating device 100m.

A light-emitting element 32m is arranged in the cavity 33m and is not in contact with the light-transmissive cover 31m. In this embodiment, the light-emitting element 32m is configured to be in a form of a planar spiral coil. The light-emitting element 32m is substantially arranged perpendicular to the longitudinal direction of the light heater 30m. In this embodiment, the diameter of the light-emitting element 32m in the form of a planar spiral coil is 4 mm to 10 mm. A first conductive lead 321m and a second conductive lead 322m which are connected to two ends of the light-emitting element 32m respectively extend out of the light-transmissive cover 31d through the first extension portion 311m and the second extension portion 312m, to facilitate connection with the circuit board 130m.

As shown in FIG. 20 and FIG. 21, the light-transmissive cover 31m has a slender third extension portion 313m which extends toward a front end and terminates at the front end; The third extension portion 313m is hollow, and the hollow of the third extension portion 313m is in communication with the cavity 33m. When the aerosol generating article 1000m is received in the heating device 100m, the light-emitting element 32m is located outside the aerosol generating substrate 1200m of the aerosol generating article 1000m. The third extension portion 313m extends into the aerosol generating substrate 1200m of the aerosol generating article 1000m. Therefore, during use, part of the light emitted by the light-emitting element 32m directly irradiates the upstream end surface of the aerosol generating substrate 1200m as shown by an arrow R2 in FIG. 21, and another part of the light radiates onto the inner surface of the aerosol generating substrate 1200m after passing through the third extension portion 313m as shown by an arrow R5 in FIG. 21; In the meantime, light rays are radiated from the inner surface and the upstream end surface of the aerosol generating substrate 1200m for heating, and this facilitates uniform heating.

Alternatively, FIG. 22 to FIG. 25 are schematic diagrams of an aerosol generating system of a heating device 100n and an aerosol generating article 1000n according to another embodiment. In this embodiment, the aerosol generating article 1000n is in a shape of a sheet. The aerosol generating article 1000n is of a laminated structure which includes a plurality of layers. The aerosol generating article 1000n includes:
a basic layer 1100n, a support layer 1300n, and an aerosol generating substrate 1200n. The aerosol generating substrate 1200n is mainly heated to generate an aerosol.

In some embodiments, the basic layer 1100n may generally be made of a heat-conductive metal or an alloy foil material such as aluminum foil, ceramic, hard paper, and plastic. The basic layer 1100n provides a base on which the support layer 1300n and the aerosol generating substrate 1200n are combined and arranged.

In some embodiments, the support layer 1300n is combined on the basic layer 1100n. The support layer 1300n is configured to improve the mechanical strength of the aerosol generating article 1000n. In some embodiments, the support layer 1300n includes paper. Alternatively, the support layer 1300n includes a fiber layer. The support layer 1300n includes fiber paper made of wood fiber, hemp fiber or flax fiber, bamboo fiber, and the like. In this embodiment, the support layer 1300n is surrounded or arranged with a plurality of accommodating recessed cavities 1310n which are arranged discretely. The aerosol generating substrate 1200n includes a plurality of substrate units arranged discretely in the accommodating recessed cavities 1310n.

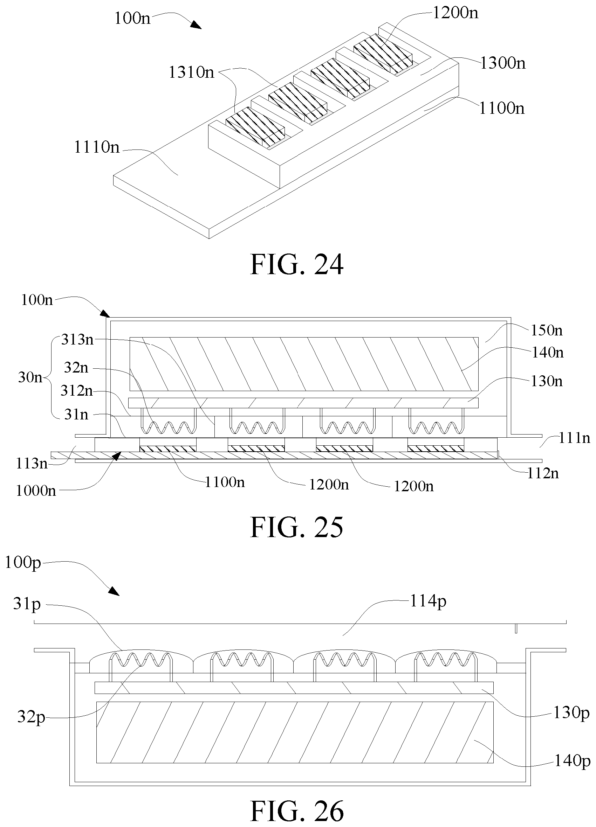

In some embodiments, the plurality of discrete substrate units of the aerosol generating substrate 1200n can be independently heated sequentially, to generate an aerosol. The surfaces of the plurality of discrete substrate units of the aerosol generating substrate 1200n have a height difference from the surface of the support layer 1300n. Alternatively, the surface of the aerosol generating substrate 1200n and the surface of the support layer 1300n are not flush. Specifically, the surface of the aerosol generating substrate 1200n is recessed relative to the surface of the support layer 1300n. As shown in FIG. 24, around the accommodating recessed cavity 1310n, one side is open or opened, to form an output port for outputting aerosol.

In some embodiments, the quantity of the substrate units of the aerosol generating substrate 1200n may be greater. The substrate units of the aerosol generating substrate 1200n may be arranged at intervals along a predetermined direction. Alternatively, the substrate units of the aerosol generating substrate 1200n may be arranged in a matrix form.

As shown in FIG. 23 and FIG. 24, the basic layer 1100n further includes an operation portion 1110n which protrudes in the length direction relative to the support layer 1300n. The operation portion 1110n is operated by the user, for example, by clamping with fingers, to receive the aerosol generating article 1000n into the receiving cavity 114n of the heating device 100n or remove the aerosol generating article from the receiving cavity 114n. During use, the operation portion 1110n is not received in the receiving cavity 114n of the heating device 100n, or the operation portion 1110n is exposed outside the receiving cavity 114n of the heating device 100n.

As shown in FIG. 22 to FIG. 25, the heating device 100n includes:
a receiving opening 113n, arranged on a first side of the heating device 100n;
a receiving cavity 114n, where during use, the user can receive the aerosol generating article 1000n in the receiving cavity 114n through the receiving opening 113n by clamping the operation portion 1110n, so that the aerosol generating substrate 1200n is received in the receiving cavity 114n and aligned with the light heater 30n, and when the aerosol generating substrate 1200n of the aerosol generating article 1000n is received in the receiving cavity 114n, the operation portion 1110n is exposed outside the receiving cavity 114n of the heating device 100n;
a stopping structure 112n, where when the aerosol generating article 1000n is received in the receiving cavity 114n through the receiving opening 113n, the aerosol generating article 1000n abuts against the stopping structure 112n to form stopping, and
when the aerosol generating article 1000n is received in the receiving cavity 114n, the aerosol generating article 1000n does not entirely block or close the receiving opening 113n, thereby causing the receiving opening 113n to be further used as an air inlet for external air to enter the receiving cavity 114n during inhalation; and
an air outlet 111n, arranged on a second side of the heating device 100n, configured to output an aerosol during inhalation; and
a battery core 140n and a circuit board 130n.

As shown in FIG. 22 to FIG. 25, the heating device 100n further includes:
a light heater 30n, adjacent to the receiving cavity 114n or at least partially defining the receiving cavity 114n. When the aerosol generating article 1000n is received in the receiving cavity 114n, the light heater 30n faces toward or is aligned with the aerosol generating substrate 1200n of the aerosol generating article 1000n. Therefore, the substrate units of the aerosol generating substrate 1200n are heated by radiating light so as to generate an aerosol.

In this embodiment, the light heater 30n is substantially configured to be in a form of a lamp panel. The light heater 30n is substantially in a shape of a plate. Specifically, the light heater 30n includes:
a light-transmissive cover 31n, at least partially exposed to the receiving cavity 114n or at least partially defining the receiving cavity 114n;
a plurality of light-emitting elements 32n, arranged discretely or in a matrix form, where the plurality of light-emitting elements 32n are arranged opposite to the substrate units of the plurality of aerosol generating substrates 1200n, so that each of the light-emitting elements 32n can emit light toward the opposite substrate unit of the aerosol generating substrate 1200n, thereby heating to generate an aerosol;
an opaque partition wall 313n, located between adjacent light-emitting elements 32n, while being able to isolate or enclose each of the light-emitting elements 32n, also prevents the light emitted by the light-emitting elements 32n from radiating to a substrate unit of another aerosol generating substrate 1200n; and
an opaque support wall 312n, arranged opposite to the light-transmissive cover 31n, and jointly defining, together with the light-transmissive cover 31n, a sealed cavity located between the opaque support wall and the light-transmissive cover, to accommodate the light-emitting element 32n. In a similar embodiment, the cavity accommodating the light-emitting element 32n is sealed. The light-emitting element 32n is not in contact with both the light-transmissive cover 31n and the support wall 312n. The light-emitting element 32n is made of luminescent materials such as a tungsten wire, a carbon fiber wire, and a tin oxide wire, and emits light at a working temperature of 450°C to 2800°C. When the light-emitting element 32n operates, the light-transmissive cover 31n can absorb or transfer heat originating from the light-emitting element 32n, so that the light-transmissive cover has a temperature of 300°C to 600°C. In a similar embodiment, halogen is filled in the cavity, for example, iodine vapor. Alternatively, in some embodiments, an inert gas is filled in the cavity, for example, argon or helium.

In some embodiments, the circuit board 130n is configured to control several or a plurality of light-emitting elements 32n to be heated sequentially one after another following a predetermined order. In some embodiments, the circuit board 130n is configured to control several or a plurality of light-emitting elements 32n to not heat simultaneously. Therefore, for example, when the user inhales, the circuit board 130n controls only one light-emitting element 32n to heat to generate aerosol which satisfies one inhalation. In some embodiments, during each inhalation, an amount of total particulate matter (TPM) generated by the circuit board 130n controlling several light-emitting elements 32n to independently heat the substrate unit of the aerosol generating substrate 1200n may be at least 1.5 mg, at least 1.7 mg, at least 2.0 mg, at least 2.5 mg, at least 3.0 mg, about 1.0 mg to about 5.0 mg, about 1.5 mg to about 4.0 mg, about 2.0 mg to about 4.0 mg, or about 2.0 mg to about 3.0 mg, at least 3 mg to about 7 mg, about 4 mg to about 8 mg, and about 5 mg to about 10 mg.

In some embodiments, the circuit board 130n controls a predetermined order for several light-emitting elements 32n in which the light-emitting elements are turned sequentially one after another. Specifically, for example, during a first puff of a user, by the circuit board 130n, power is provided to a first light-emitting element 32n closest to a left side to perform heating to generate an aerosol for a puff; during a next puff of the user, by the circuit board 130n, power is provided to a second light-emitting element 32n closest to the left side to perform heating to generate aerosol for a puff; and then a next one performs heating, until all of the light-emitting elements 32n perform heating, the substrate unit of the aerosol generating article 1000n is completely consumed, and a user is prompted to replace it with a new aerosol generating article 1000n. In the foregoing implementations, the light-emitting elements 32n are sequentially and individually started and not simultaneously started for heating, which means minimizing excessive consumption of an aerosol generating substrate and reducing waste of energy. Alternatively, in some other implementations, several light-emitting elements 32n are sequentially started based on a predetermined order along an array arrangement direction. Alternatively, in some other variant implementations, the circuit board 130n controls several light-emitting elements 32n to separately start in sequence, without intervals along an arrangement direction of the light-emitting elements 32n. Alternatively, in some other variant implementations, the circuit board 130n controls several light-emitting elements 32n to separately start one by one, with an interval or in a hopping manner.

For example, in some embodiments, several or a plurality of light-emitting elements 32n can be energized in sequence, and in other words, the light-emitting elements are energized once for each user puff to generate aerosol consistently based on each puff. Correspondingly, in some embodiments, each puff action of a user can be sensed by an airflow sensor, for example, a microphone or a micro-electro-mechanical system (MEMS) sensor. Based on a sensing result by the airflow sensor, power is provided to several or a plurality of light-emitting elements 32n through the circuit board 130n. In a preferred implementation, the circuit board 130n controls several light-emitting elements 32n to start sequentially in a predetermined order based on an inhalation action of a user. In some other variant implementations, the circuit board 130n controls several light-emitting elements 32n to start sequentially at a predetermined interval time. For example, a predetermined interval ranges from about 30 seconds to 300 seconds.

When the aerosol generating article 1000n is received in a receiving cavity 114n, the substrate unit of the aerosol generating substrate 1200n faces toward or is close to a light-transmissive cover 31n and is spaced from, rather than in contact with, the light-transmissive cover 31n. Alternatively, in some specific embodiments, the heating device 100n is configured, such that the aerosol generating article 1000n can only be received in the receiving cavity 114n in a predetermined direction, and the predetermined direction causes the substrate unit of the aerosol generating substrate 1200n to face toward or be close to the light-transmissive cover 31n.

In this embodiment, the support wall 312n is configured to support and fix the light heater 30n. The support wall 312n is configured to isolate the light-emitting element 32n from an electronic chamber 150n in which the circuit board 130n and the battery core 140n are located. The light-emitting element 32n extends into the electronic chamber 150n after passing through the support wall 312n through welded conductive leads and is conductively connected to the circuit board 130n, to supply electric power to the light-emitting element 32n.

In some embodiments, the electronic chamber 150n and the light heater 30n are optically isolated from each other to prevent the light emitted by the light-emitting element 32n from irradiating the circuit board 130n and the battery core 140n in the electronic chamber 150n.

In the embodiment shown in FIG. 25, a surface of the light-transmissive cover 31n facing toward or adjacent to the receiving cavity 114n is a flat plane.

Alternatively, FIG. 26 is a schematic diagram of a heating device 100p according to another embodiment. In this embodiment, a surface of a light-transmissive cover 31p of a light heater facing toward or adjacent to a receiving cavity 114p is not flat. For example, the surface of the light-transmissive cover 31p facing toward or adjacent to the receiving cavity 114p includes or is configured as a curved arc surface and protrudes toward the receiving cavity 114p. Therefore, an effect of a collimating lens is approximately formed, and this facilitates guiding of the light emitted by the light-emitting element 32p toward an opposite substrate unit as much as possible.

Alternatively, in some other variant embodiments, the light heater 30n and/or the aerosol generating article 1000n are movably arranged in the heating device 100n. Further, by a user operation, one of the light heater 30n and the aerosol generating article 1000n can be moved relative to the other one, so that an aligned position between the light-emitting element 32n and a discrete substrate unit is changed, to selectively change heating for the substrate unit of the aerosol generating substrate 1200n.

Alternatively, in some other embodiments, the foregoing aerosol generating system may also be an aerosol generating system for generating an aerosol by heating a liquid aerosol generating substrate. For example, the aerosol generating system may include:
a liquid storage cavity, to store a liquid aerosol generating substrate;
a liquid-guiding element, configured to be in fluid communication with the liquid storage cavity, to absorb the liquid aerosol generating substrate; and
a light heater, optically coupled to the liquid-guiding element, to generate an aerosol by heating, by light, at least part of the liquid aerosol generating substrate in the liquid-guiding element.

In some embodiments, the liquid-guiding element is, for example, a flexible capillary fiber element such as a sponge body and natural cotton, or a rigid porous body element such as a porous ceramic body and a porous glass body.

In some embodiments, the light heater is, for example, the light heater described in the foregoing embodiments, and heats the liquid aerosol generating substrate by emitting light.

It is to be noted that, although the specification of this application and the drawings thereof provide the preferred embodiments of this application, this application is not limited to the embodiments described in this specification. Further, a person of ordinary skill in the art may make improvements or modifications according to the above descriptions, and all of the improvements and modifications shall fall within the protection scope of the appended claims of this application.

## Claims

1. A heating device, configured to heat an aerosol generating article to generate an aerosol;
**characterized by** comprising:
a receiving cavity, configured to receive the aerosol generating article; and
a light heater, configured to emit light to irradiate the aerosol generating article to heat the aerosol generating article through the light to generate the aerosol; and the light heater is not in contact with the aerosol generating article when the aerosol generating article is received in the receiving cavity.

2. The heating device according to claim 1, **characterized in that** the light heater is configured substantially as a point light source, a line light source, or an area light source; and/or
the light heater is configured substantially in a form of a bulb, a lamp tube, or a lamp panel.

3. The heating device according to claim 1 or 2, **characterized in that** the light heater and the receiving cavity are arranged at intervals along a longitudinal direction of the receiving cavity; and a first spacing is defined between the light heater and the receiving cavity when the aerosol generating article is received in the receiving cavity, so that the light heater is not in contact with the aerosol generating article.

4. The heating device according to claim 3, **characterized in that** the first spacing is 2 mm to 10 mm.

5. The heating device according to claim 1 or 2, **characterized by** further comprising:
an airflow channel, defining a channel path through which air enters the aerosol generating article through the light heater, wherein
the light heater is at least partially exposed to the airflow channel; and/or
the light heater is located upstream of the aerosol generating article; and/or
air flows through at least part of a surface of the light heater during inhalation to partially absorb heat from the surface of the light heater and is heated, and is outputted to the aerosol generating article.

6. The heating device according to claim 1 or 2, **characterized in that** the light heater comprises:
a light-transmissive cover through which light is capable of being transmitted and which surrounds or defines a sealed cavity; and
a light-emitting element, configured to emit light; and the light-emitting element is located in the cavity and arranged without contact with the light-transmissive cover.

7. The heating device according to claim 6, **characterized in that** the light-emitting element is an electroluminescent element.

8. The heating device according to claim 6, **characterized by** further comprising:
a battery core, configured to supply power; and
a control circuit, configured to control the battery core to provide electric power to the light-emitting element to enable the light-emitting element to emit light at a working temperature of 450°C to 2800°C.

9. The heating device according to claim 8, **characterized in that** the light-emitting element has a working power of about 20 W to 60 W; and/or
the light-emitting element has a resistance value of 0.1 Ω to 0.6 Ω at the working temperature of 450°C to 2800°C; and/or
light having a wavelength of 800 nm to 1300 nm in the light emitted by the light-emitting element accounts for more than 60% of all the light.

10. The heating device according to claim 7, **characterized in that** the light-emitting element comprises tungsten, a carbon fiber, or an oxide of at least one metal element.

11. The heating device according to claim 6, **characterized in that** halogen is sealed in the cavity; and/or
1 × 10-6 to 1 × 10-2 µmol/mm3 halogen is sealed in the cavity; and/or
an inert gas is filled into the cavity; and/or
the cavity has a degree of vacuum; and/or
a pressure in the cavity is less than 0.85 atm.

12. The heating device according to claim 6, **characterized in that** a transmittance of the light-transmissive cover for the light emitted by the light-emitting element is above 90%; and/or
the light-transmissive cover comprises at least one of quartz, glass, ceramic, or mica; and/or
at least one or more collimating lenses are defined on the light-transmissive cover; and/or
at least one protruding structure is arranged on the light-transmissive cover; and/or
at least one heat dissipation part is arranged on the light-transmissive cover to dissipate heat; and/or
the light-transmissive cover is configured to be substantially in a shape of a sphere.

13. The heating device according to claim 6, **characterized in that** the light-transmissive cover comprises a first portion and a second portion; and when the aerosol generating article is received in the receiving cavity, the first portion faces toward or is adjacent to the aerosol generating article, and the second portion faces away from the aerosol generating article.

14. The heating device according to claim 13, **characterized in that** the first portion and the second portion are both curved-surface or arc-surface structures, and have opposite bending directions; and/or
a curvature of the first portion is greater than a curvature of the second portion; and/or
a surface of the first portion is smooth, and at least one protruding heat dissipation part is arranged on a surface of the second portion.

15. The heating device according to claim 6, **characterized in that** the light-transmissive cover comprises a first portion and a second portion; and
the light-emitting element is located in the first portion and avoids the second portion; and
the heating device supports the light heater by holding the second portion.

16. The heating device according to claim 6, **characterized in that** the light-emitting element is configured in a form of a solenoid coil; and/or
the light-emitting element has 3 to 8 windings; and/or
the light-emitting element has a length of 2 mm to 5 mm; and/or
a wire material of the light-emitting element has a diameter of about 0.05 mm to 0.4 mm; and/or
the light-emitting element is wound by a tungsten wire having a purity of above 99%; and/or
an axis of the light-emitting element is perpendicular to the aerosol generating article or a longitudinal direction of the receiving cavity.

17. The heating device according to claim 6, **characterized in that** the light-emitting element is configured in a form of a planar spiral coil; and/or
the light-emitting element is substantially planar; and/or
the light-emitting element comprises a flat base, and a light-emitting track or a light-emitting coating formed on the base; and/or
the light-emitting element has a diameter of 4 mm to 10 mm.

18. The heating device according to claim 1 or 2, **characterized by** further comprising:
a light guide arranged around at least part of the light heater, which is configured to guide part of the light emitted by the light heater toward an outer side surface of the aerosol generating article.

19. The heating device according to claim 18, **characterized in that** part of the light emitted by the light heater irradiates an upstream end portion of the aerosol, and another part of the light is guided through the light guide to the outer side surface of the aerosol generating article.

20. The heating device according to claim 18, **characterized in that** the light guide is reflective; and/or
the light guide is configured to guide the part of the light emitted by the light heater, by reflecting the part of the light at least once, to the outer side surface of the aerosol generating article.

21. The heating device according to claim 18, **characterized in that** the light guide comprises a first light-guiding portion which surrounds the light heater, and a second portion which extends from the first light-guiding portion toward the receiving cavity or the aerosol generating article.

22. The heating device according to claim 21, **characterized in that** the first light-guiding portion has a cross-sectional shape that is approximately parabolic; and/or
the light heater is arranged at or near a focus of the parabolic cross section of the first light-guiding portion; and/or
the first light-guiding portion has a substantially-tapered shape.

23. The heating device according to claim 1 or 2, **characterized by** further comprising:
a battery core, configured to supply power;
a circuit board, configured to control the battery core to provide electric power to the light heater; and
an electronic chamber, configured to accommodate the battery core and the circuit board, wherein the electronic chamber and the light heater are optically isolated to prevent the light emitted by the light heater from irradiating the battery core and/or the circuit board.

24. The heating device according to claim 6, **characterized in that** the light heater further comprises:
a conductive lead, electrically connected to the light-emitting element to guide a current on the light-emitting element, wherein the conductive lead at least partially extends, from the cavity, out of the light-transmissive cover; and
a sealing material, arranged between the conductive lead and the light-transmissive cover to enable sealing therebetween.

25. The heating device according to claim 24, **characterized in that** the sealing material comprises a metal which withstands a temperature of at least 800°C; and/or
the sealing material comprises molybdenum, titanium, or an alloy thereof.

26. The heating device according to claim 6, **characterized in that** the light heater and/or the light-transmissive cover is configured as a pin which extends at least partially in the receiving cavity, or in a shape of a column or a rod or a bar; and the light heater and/or the light-transmissive cover is configured to, when the aerosol generating article is received in the receiving cavity, extend into a central hole of the aerosol generating article, so that the light-emitting element and the aerosol generating article overlap in a radial direction.

27. The heating device according to claim 6, **characterized in that** the light-emitting element is located outside the receiving cavity;
the light-transmissive cover has an extension portion which extends at least partially into the receiving cavity; and the extension portion extends, when the aerosol generating article is received in the receiving cavity, into a central hole of the aerosol generating article, so that part of the light emitted by the light-emitting element is guided to an inner surface of the aerosol generating article.

28. The heating device according to claim 1 or 2, **characterized in that** the light heater comprises at least two light-emitting elements optically isolated from each other.

29. The heating device according to claim 1 or 2, **characterized in that** the light heater comprises a plurality of light-emitting elements arranged discretely or arranged in an array; and
the plurality of light-emitting elements are configured to emit light independently or sequentially to independently or sequentially heat different parts of the aerosol generating article.

30. An aerosol generating system, **characterized by** comprising:
an aerosol generating article; and
the heating device according to any one of claims 1 to 29.

31. A light heater for a heating device, **characterized by** comprising:
a light-transmissive cover through which light is capable of being transmitted and which surrounds or defines a sealed cavity; and
a light-emitting element, configured to emit light, wherein the light-emitting element is located in the cavity and arranged without contact with the light-transmissive cover.
